(19) Europäisches Patentamt
European Patent Office
Office européen des brevets

(11) **EP 4 546 031 A1**

(12) **EUROPEAN PATENT APPLICATION**
published in accordance with Art. 153(4) EPC

(43) Date of publication:
**30.04.2025 Bulletin 2025/18**

(21) Application number: **23826085.5**

(22) Date of filing: **30.05.2023**

(51) International Patent Classification (IPC):
**G02B 27/01** (2006.01)    **G02B 27/28** (2006.01)

(52) Cooperative Patent Classification (CPC):
**G02B 27/00; G02B 27/01; G02B 27/28**

(86) International application number:
**PCT/CN2023/097007**

(87) International publication number:
**WO 2023/246436 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.06.2022 CN 202210714718**

(71) Applicant: **Beijing Zitiao Network Technology Co.,
Ltd.
Beijing 100190 (CN)**

(72) Inventor: **WANG, Yuanpeng
Beijing 100028 (CN)**

(74) Representative: **Dentons UK and Middle East LLP
One Fleet Place
London EC4M 7WS (GB)**

(54) **OPTICAL SYSTEM AND DISPLAY DEVICE**

(57)    An optical system (10) and a display device. The optical system (10) comprises a lens (100), a polarization transflective film (500), a phase retardation film (600), and a transflective film (700). The lens (100) comprises a flat surface (110) and an aspheric surface (120), the aspheric surface (120) being a convex surface. The phase retardation film (600) and the transflective film (700) are disposed on the side of the flat surface (110) of the lens (100) away from the aspheric surface (120); and the transflective film (700) is disposed on the side of the aspheric surface (120) of the lens (100) away from the flat surface (110). The lens (100) is a one-piece lens, the flat surface (110) and the aspheric surface (120) are located on the opposite sides of the one-piece lens (100), the optical system (10) has a focal length of 26 to 28 millimeters, the lens (100) has an effective aperture of 50 to 52 millimeters, and the aspheric surface (120) has a radius of curvature of -93 to -97 millimeters. In the optical system (10) using a folding optical path, the lens (100) is configured to be the one-piece lens (100) comprising the aspheric surface (120); and the focal length of the optical system (10), the effective aperture of the one-piece lens (100), the radius of curvature of the aspheric surface (120), and other parameters are optimized, such that the optical system (10) has a large eye relief while achieving displaying at a large field of view, thereby improving the use experience of users.

Fig. 2

**Description**

The present application claims priority of Chinese Patent Application No. 202210714718.1 filed on June 22, 2022, the disclosure of which is incorporated herein by reference in its entirety as part of the present application.

TECHNICAL FIELD

Embodiments of the present disclosure relate to an optical system and a display device.

BACKGROUND

A virtual reality (VR) product is a human-computer interaction product created by means of a computer and the latest sensor technology, which comprehensively utilizes a computer graphics system and various interface devices such as reality and control, to provide an immersive feeling in an interactive three-dimensional environment generated on the computer.
With gradual popularization of virtual reality products, users have increasingly high requirements on use of virtual reality products. At present, more and more users choose to use virtual reality products to watch movies, so virtual reality display devices with large field of view (FOV) display effects have become the mainstream.

SUMMARY

The embodiments of the present disclosure relate to an optical system and a display device.
An embodiment of the present disclosure provides an optical system, which includes a lens, a polarization transflective film, a phase retardation film and a transflective film. The lens includes a planar surface and an aspherical surface; the aspherical surface is a convex surface; and a side of the planar surface that is away from the aspherical surface is a light exit side of the lens. The polarization transflective film is disposed on a side of the planar surface of the lens that is away from the aspherical surface of the lens; the phase retardation film is disposed between the polarization transflective film and the planar surface of the lens; the transflective film is disposed on a side of the aspherical surface of the lens that is away from the planar surface of the lens. The lens is an integrated lens; the planar surface and the aspherical surface are located on two opposite sides of the integrated lens; a focal length of the optical system is 26 millimeters to 28 millimeters; an effective aperture of the lens is 50 millimeters to 52 millimeters; and a curvature radius of the aspherical surface is -93 millimeters to -97 millimeters.
For example, according to an embodiment of the present disclosure, a focal length of the lens is 160 millimeters to 180 millimeters.
For example, according to an embodiment of the present disclosure, a maximum thickness of the lens is 6 millimeters to 8 millimeters.
For example, according to an embodiment of the present disclosure, an eye relief of the optical system is 13 millimeters to 21 millimeters.
For example, according to an embodiment of the present disclosure, the eye relief of the optical system is no less than 15 millimeters.
For example, according to an embodiment of the present disclosure, a maximum field of view of the optical system is 100 ° to 110 °.
For example, according to an embodiment of the present disclosure, a modulation transfer function value of the optical system at the maximum field of view is no less than 0.7 at a position where a spatial frequency is 20 line pairs/millimeter.
For example, according to an embodiment of the present disclosure, a modulation transfer function value of the optical system at the maximum field of view is no less than 0.8 at a position where a spatial frequency is 15 line pairs/millimeter.
For example, according to an embodiment of the present disclosure, a refractive index of the lens is 1.5 to 1.6.
For example, according to an embodiment of the present disclosure, the phase retardation film and the polarization transflective film are fitted to the planar surface.
An embodiment of the present disclosure provides a display device, including a display screen and any optical system as mentioned above. The display screen is located on a side of the aspherical surface of the lens that is away from the planar surface of the lens; and a display surface of the display screen is located on a focal plane of a light incident side of the optical system.
For example, according to an embodiment of the present disclosure, a distance between the aspherical surface and the display surface of the display screen is 26 millimeters to 28 millimeters.
For example, according to an embodiment of the present disclosure, a maximum size of the display surface of the display screen is 2 inches to 3 inches.

The optical system provided by the embodiment of the present disclosure adopts the folded optical path and sets the lens as an integrated lens; parameters such as the focal length of the optical system, the effective aperture of the integrated lens and the curvature radius of the aspherical surface are set and optimized, so that the optical system may have greater eye relief while implementing display of large field of view, thereby improving user experience.

BRIEF DESCRIPTION OF DRAWINGS

In order to more clearly illustrate the technical solutions of the embodiments of the present disclosure, the accompanying drawings of the embodiments will be briefly introduced below, it is obvious that the accompanying drawings in the following description merely relate to some embodiments of the present disclosure, but not the limitations of the present disclosure.

Fig. 1 is a structural schematic diagram of a lens provided by an embodiment of the present disclosure.
Fig. 2 is a schematic diagram of an optical path of an optical system including the lens shown in Fig. 1.
Fig. 3 is a modulation transfer function curve of the optical system provided by an embodiment of the present disclosure when a cutoff frequency is 20 line pairs/millimeter.
Fig. 4 is a modulation transfer function curve of the optical system provided by the embodiment of the present disclosure when a cutoff frequency is 15 line pairs/millimeter.
Fig. 5 is a structural schematic diagram of a display device provided by an embodiment of the present disclosure.

DETAILED DESCRIPTION

In order to make objects, technical details and advantages of the embodiments of the disclosure apparent, the technical solutions of the embodiments will be described in a clearly and fully understandable way in connection with the drawings related to the embodiments of the disclosure. Apparently, the described embodiments are just a part but not all of the embodiments of the disclosure. Based on the described embodiments herein, those skilled in the art can obtain other embodiment(s), without any inventive work, which should be within the scope of the disclosure.

Unless otherwise defined, all the technical and scientific terms used herein have the same meanings as commonly understood by one of ordinary skill in the art to which the present disclosure belongs. The terms "first," "second," etc., which are used in the description and the claims of the present disclosure, are not intended to indicate any sequence, amount or importance, but distinguish various components. The terms "comprise," "comprising," "include," "including," etc., are intended to specify that the elements or the objects stated before these terms encompass the elements or the objects and equivalents thereof listed after these terms, but do not preclude the other elements or objects.

In study, an inventor of the present disclosure finds that: in order to implement a watching effect of a large field of view (FOV), eye relief (ERF) of the current virtual reality folded optical path (Pancake) product is usually 13 millimeters to 15 millimeters. However, the eye relief is difficult to meet needs of myopic users wearing glasses, which in turn affects user experience.

The embodiments of the present disclosure provide an optical system and a display device. The optical system includes a lens, a polarization transflective film, a phase retardation film and a transflective film. The lens includes a planar surface and an aspherical surface; the aspherical surface is a convex surface; and a side of the planar surface that is away from the aspherical surface is a light exit side of the lens. The polarization transflective film is disposed on a side of the planar surface of the lens that is away from the aspherical surface of the lens; the phase retardation film is disposed between the polarization transflective film and the planar surface of the lens; the transflective film is disposed on a side of the aspherical surface of the lens that is away from the planar surface of the lens. The lens is an integrated lens; the planar surface and the aspherical surface are located on two opposite sides of the integrated lens; a focal length of the optical system is 26 millimeters to 28 millimeters; an effective aperture of the lens is 50 millimeters to 52 millimeters; and a curvature radius of the aspherical surface is -93 millimeters to -97 millimeters. The optical system provided by the embodiment of the present disclosure may be an optical system that adopts the folded optical path (Pancake), sets the polarization transflective film, the phase retardation films and the transflective films on both sides of the lens, and sets the lens as an integrated lens including an aspheric surface. The focal length of the optical system is set, and parameters such as the effective aperture of the integrated lens and the curvature radius of the aspherical surface are set and optimized, so that the optical system may have greater eye relief while implementing ultra-short focal length and display of large field of view, thereby improving user experience.

The optical system and the display device provided by the embodiments of the present disclosure will be described below in conjunction with the accompanying drawings.

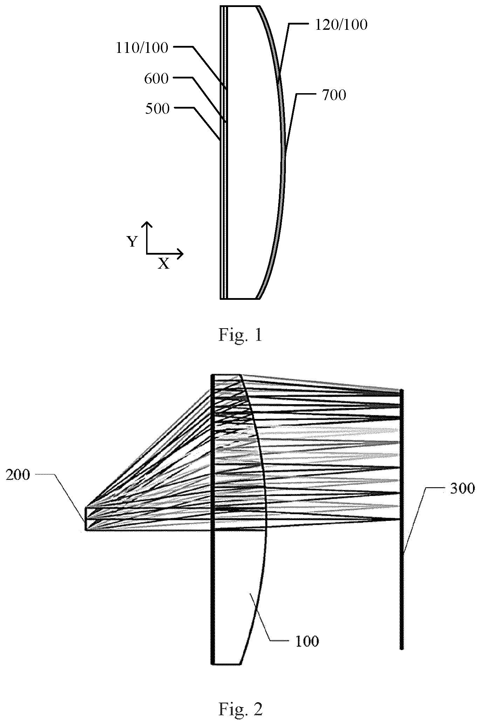

Fig. 1 is a structural schematic diagram of a lens provided by an embodiment of the present disclosure; Fig. 2 is a schematic diagram of an optical path of the optical system including the lens shown in Fig. 1. As shown in Fig. 1 and Fig. 2, the optical system includes a lens 100; the lens 100 includes a planar surface 110 and an aspherical surface 120; the aspherical surface 120 is a convex surface; and a side of the planar surface 110 that is away from the aspherical surface 120 is a light exit side of the lens 100. As shown in Fig. 1, the optical system further includes a polarization transflective film 500, disposed on a side of the planar surface 110 that is away from the aspherical surface 120, and a phase retardation film 600, disposed between the polarization transflective film 500 and the planar surface 110. As shown in Fig. 1, the optical system further includes a transflective film 700, disposed on a side of the aspherical surface 120 that is away from the planar surface 110.

As shown in Fig. 1, the lens 100 is an integrated lens 100; the planar surface 110 and the aspherical surface 120 are located on two opposite sides of the integrated lens 100; a focal length of the optical system is 26 millimeters to 28 millimeters; an effective aperture of the lens 100 is 50 millimeters to 52 millimeters; and a curvature radius of the aspherical surface 120 is -93 millimeters to -97 millimeters.

The optical system provided by the embodiment of the present disclosure may be an optical system adopting the folded optical path (Pancake); while setting the polarization transflective film and the phase retardation film on one side of the lens, and the transflective film on the other side of the lens, by setting the lens as an integrated lens including the aspheric surface, the focal length of the optical system is set, and parameters such as the effective aperture of the integrated lens and the curvature radius of the aspherical surface are set and optimized, so that the optical system may have greater eye relief while implementing ultra-short focal length and display of large field of view, thereby improving user experience.

For example, the planar surface 110 and the aspherical surface 120 included by the above-described integrated lens 100 are two surfaces of the lens 100; for example, the above-described integrated lens 100 may be referred to as a one-piece lens. For example, the above-described integrated lens 100 may be a planoconvex lens.

For example, the aspherical surface 120 bends towards a side away from the planar surface 110 to form a convex surface.

For example, the focal length of the optical system may be 26.5 millimeters to 27.5 millimeters. For example, the focal length of the optical system may be 27 millimeters to 27.3 millimeters.

In some examples, the focal length of the lens 100 is 160 millimeters to 180 millimeters. For example, the focal length of the lens 100 may be 162 millimeters to 178 millimeters. For example, the focal length of the lens 100 may be 165 millimeters to 175 millimeters. For example, the focal length of the lens 100 may be 167 millimeters to 172 millimeters. For example, the focal length of the lens 100 may be 169 millimeters to 170 millimeters. The focal length of the above-described lens refers to a focal length when the surface of the lens is not plated.

For example, as shown in Fig. 1, the polarization transflective film 500 and the phase retardation film 600 are located on the near eye side of the lens 100; and the transflective film 700 is located on a near image source side of the lens 100. For example, the polarization transflective film 500 and the phase retardation film 600 are disposed on a side of the planar surface 110 that is away from the aspherical surface 120; and the transflective film 700 is disposed on a side of the aspherical surface 120 that is away from the planar surface 110.

In some examples, the phase retardation film 600 and the polarization transflective film 500 may serve as composite film layers fitted to the planar surface 110 of the lens 100. For example, the transflective film 700 may be coated or plated on the aspherical surface 120.

For example, as shown in Fig. 1 and Fig. 2, the polarization transflective film 500 may include a polarization transmission film and a reflective polarization film; and the polarization transmission film is located on a side of the reflective polarization film that is away from the phase retardation film 600.

For example, the polarization transflective film 500 and the phase retardation film 600 constitute a folded optical path polarizing device, also referred to as a composite film. For example, the composite film is fitted to the planar surface 110 of the lens 100.

For example, the reflective polarization film plays a role in transmitting polarized light in one direction (e.g., s-linearly polarized light) and reflect polarized light in another direction (e.g., p-linearly polarized light). For example, the reflective polarization film (also referred to as a polarization beam splitter film) has characteristics as follows: the film material plane has an optical axis direction, and transmittance of a polarization component of incident light parallel to the direction (parallel transmittance) is greater than 80%. For example, the parallel transmittance is greater than 85%. Meanwhile, reflectance of the component (parallel reflectance) is less than 5%. For example, the parallel reflectance is less than 1%. Transmittance of a polarization component of the incident light perpendicular to the direction (orthogonal transmittance) is less than 0.5%. For example, the orthogonal transmittance is less than 0.1%. Meanwhile, reflectance of the component (orthogonal reflectance) is greater than 80%. For example, the orthogonal reflectance is greater than 85%. For example, the reflective polarization film may be a plastic reflective film.

For example, a transmission axis of the polarization transmission film is parallel to a transmission axis of the reflective polarization film; for example, the polarization transmission film may be a linear polarization film used to further filter out other stray light, allowing only polarized light (e.g., s-linearly polarized light) passing through the polarization transflective film to enter the human eye.

For example, as shown in Fig. 1 and Fig. 2, the phase retardation film 600 is configured to cause transmitted light to implement transition between a circularly polarized state and a linearly polarized state. For example, the phase retardation film 600 may be a 1/4 wave plate.

For example, as shown in Fig. 1 and Fig. 2, the transflective film 700 may be configured to reflect one portion of light and transmit the other portion of light. For example, the transflective film 700 may reflect 50% of the light and transmit 50% of the light.

As shown in Fig. 1 and Fig. 2, the polarization transflective film 500, the phase retardation film 600, and the transflective film 700 as described above are adopted to form the folded optical path; and a principle of the folded optical path is as follows: a side of a display surface 300 of the display screen on a side of the aspherical surface 120 that is away from the planar surface 110 may be provided with a wave plate; image light emitted from the display surface 300 is converted into right-handed circularly polarized light after passing through the wave plate; and the right-handed circularly polarized light transmitted through the transflective film 700 keeps a polarized state unchanged. The light enters the lens 100, and reaches the phase retardation film 600 after being transmitted through the lens 100; the right-handed circularly polarized light incident on the phase retardation film 600 is converted into p-linearly polarized light, the p-linearly polarized light is reflected back to the phase retardation film 600 by the polarization transflective film 500, where a first reflection occurs. Thereafter, the p-linearly polarized light is converted into right-handed circularly polarized light after passing through the phase retardation film 600; the right-handed circularly polarized light is transmitted through the lens 100 before reaching the transflective film 700, and is reflected by the transflective film 700, where a second reflection occurs. Due to half wave loss, the reflected light is changed from right-handed circularly polarized light to left-handed circularly polarized light. The left-handed circularly polarized light is transmitted through the lens 100 before reaching the phase retardation film 600, and is converted into s-linearly polarized light after transmitted through the phase retardation film 600; then, the s-linearly polarized light is transmitted through the polarization transflective film 500 and is emergent towards an exit pupil 200, for example, a human eye.

The above-described folded optical path may change a polarized state of light propagating between the polarization transflective film and the transflective film, implementing folding of a light path, so that the original focal length of the lens is folded due to, for example, two reflections added by arranging the polarization transflective film, the phase retardation film and the transflective film as described above, which greatly compresses space required between the human eye and the optical system, so that the optical system has a smaller volume and a lighter weight.

For example, the effective aperture of the lens 100 refers to the maximum aperture of the lens 100 through which light may pass; and the effective aperture is determined by maximum luminous flux of the lens 100. For example, the effective aperture of the lens 100 may be 50.5 micrometers to 51.5 micrometers. For example, the effective aperture of the lens 100 may be 51 micrometers and 51.8 micrometers.

For example, the effective aperture values of the lens 100 in respective directions perpendicular to the optical axis may be the same or different, and may be set according to product requirements.

Setting of a size of the effective aperture of the above-described lens may not only ensure a smaller size thereof perpendicular to the optical axis, but also meet requirements of a range of the field of view.

For example, a curvature radius of the aspherical surface 120 may be -95 micrometers to -95.8 micrometers. For example, the curvature radius of the aspherical surface 120 may be -93 micrometers to -95.5 micrometers. For example, the curvature radius of the aspherical surface 120 may be -94 micrometers to -95 micrometers.

For example, as shown in Fig. 1 and Fig. 2, the aspherical surface 120 may be an even aspheric surface (EVENASPH); and the curvature radius of the aspherical surface 120 is a curvature radius of a base spherical surface on a surface thereof. The above-described "base spherical surface" refers to means that the aspheric surface is further deformed based on a spherical surface, the spherical surface that serves as the basis of this aspheric surface is the base spherical surface of the aspheric surface.

For example, a side of the planar surface 110 of the lens 100 that is away from the aspherical surface 120 includes the exit pupil 200. For example, an exit pupil diameter may be 4 millimeters.

For example, in a process of optimizing parameters in the optical system, the imaging surface 300 of the optical system is located on a side of the aspherical surface 120 that is away from the planar surface 110, and the above-described imaging surface 300 is a position where the display surface of the display screen is located when the optical system is used in a display device. For example, the display surface 300 for displaying an image may be provided on a side of the aspherical surface 120 of the lens 100 that is away from the planar surface 110. For example, an image distance of a virtual image formed by the optical system may be 1,200 millimeters to 2,000 millimeters.

In some examples, as shown in Fig. 1 and Fig. 2, the maximum thickness of the lens 100 is 6 millimeters to 8 millimeters. For example, the maximum thickness of the lens 100 along an optical axis thereof (as shown in the X direction in Fig. 1) is 6 millimeters to 8 millimeters. For example, a distance from an intersection point of the planar surface 110 and the optical axis to an intersection point of the aspherical surface and the optical axis is 6 millimeters to 8 millimeters. For example, a size of the lens 100 sectioned by the optical axis thereof is 6 millimeters to 8 millimeters. For example, the maximum thickness of the lens 100 may be 6.5 millimeters to 7.5 millimeters. For example, the maximum thickness of the lens 100 may be 7 millimeters.

The lens in the optical system provided by this embodiment has a smaller size along the optical axis direction thereof, which may reduce the size of the optical system to improve compactness of the display device including the optical system.

In some examples, as shown in Fig. 1 and Fig. 2, the eye relief of the optical system is 13 millimeters to 21 millimeters. For example, a distance between the planar surface 110 of the lens 100 and the exit pupil 200 may be 13 millimeters to 21 millimeters.

In some examples, the eye relief of the optical system is no less than 15 millimeters. For example, the eye relief of the optical system may be 16 millimeters to 21 millimeters. For example, the eye relief of the optical system may be 17 millimeters to 19 millimeters. For example, the eye relief of the optical system may be 18 millimeters to 20 millimeters. The optical system provided by the present disclosure has large eye relief, which may meet needs of myopic users wearing glasses.

In some examples, as shown in Fig. 1 and Fig. 2, the maximum field of view of the optical system is 100 ° to 110 °. For example, the maximum field of view of the optical system may be 100 ° to 103 °. For example, the maximum field of view of the optical system may be 104 ° to 109 °. For example, the maximum field of view of the optical system may be 105 ° to 108 °. For example, the maximum field of view of the optical system may be 101 ° to 102 °. For example, the maximum field of view of the optical system may be 100.5 ° to 101.5 °.

In some examples, the refractive index of the lens 10 is 1.5 to 1.6. For example, the refractive index of the lens 10 may be 1.52 to 1.58. For example, the refractive index of the lens 10 may be 1.53 to 1.57. For example, the refractive index of the lens 10 may be 1.54 to 1.56. For example, the refractive index of the lens 10 may be 1.55.

For example, the material of the lens 10 includes optical resin, for example, the material of optical resin may include cyclic olefin copolymer (APL5014XH), with a refractive index of 1.555.

In the optical system provided by the present disclosure, while the lens is combined with the above-described folded optical path, the lens is set as an integrated lens including the aspherical surface; the focal length of the optical system is set; and the parameters such as the focal length and the effective aperture of the integrated lens, the curvature radius of the aspherical surface, the lens thickness, and the refractive index of the lens are set; so that on the basis that the optical system has a smaller size, the optical system may have the maximum field of view up to 100 ° to 110 °, and eye relief up to 13 millimeters to 21 millimeters, or even no less than 15 millimeters, which is favorable for improving user experience, for example, may meet needs of myopia users wearing glasses.

For example, the surface type of the aspherical surface is represented by the numerical formula below:

$$z = \frac{CY^2}{1+\sqrt{1-(1+k)C^2Y^2}} + \sum_{i=2}^{N} \alpha_i Y^{2i}.$$

For example, in the above-described formula, the height of the aspherical surface along the direction perpendicular to the optical axis is Y; the distance between the vertex of the aspherical surface and a projection of a position whose height is Y on the aspherical surface on the optical axis is z, that is, z is the coordinate along the optical axis direction; C is the curvature (the reciprocal of the curvature radius R); k is the conic constant; $\alpha_i$ is the coefficient of each higher-order term; and 2i is the order of aspherical coefficient.

When optimizing reasonable configuration of respective parameters of the lens in practice, values such as the curvature radius, the conic constant, the height, and the aspherical coefficient of the lens are put into the above-described numerical formula, so that respective optimized parameters that may correct aberrations of the lens are obtained through optical simulation calculation. By optimizing the process, the optimal values for the curvature radius, the thickness along the optical axis, the effective aperture, and the conic constant of the lens are obtained.

Table 1

| Surface | Type | Curvature Radius | T | Material | Radius | Conic constant |
|---------|------|------------------|------|----------|--------|----------------|
| Object | Standard | Infinity | -2000 | - | 2514.344597837911 | 0 |
| Stop | Standard | Infinity | 17 | - | 2.00 | 0 |
| 2 | Standard | Infinity | 7.0 | APL5014XH | 26 | 0 |
| 3 | EVENASPH | -95.657 | 18.9 | - | 26 | -1.0 |
| Image | Standard | Infinity | - | - | 23 | 0 |

For example, the above-described Table 1 schematically shows optical surface numbers (Surface), curvature radii (R) of respective optical surfaces on the optical axis, and distances (T) between respective surfaces on the optical axis from the human eye (stop) to the display screen and a subsequent optical surface sequentially numbered from the human eye (stop) to the display screen. The optical surface 2 represents the planar surface 110 of the lens 100; and the optical surface 3 represents the aspherical surface 120 of the lens 100. For example, the aspherical surface 120 may be EVENASPH.

For example, the conic constant of the EVENASPH may be -5 to -0.5. For example, the conic constant may be -3 to -0.8. For example, the conic constant may be -2 to -1.

For example, as shown in Table 1, the curvature radius of the aspherical surface 120 is -95.657 millimeters; the image distance of the virtual image formed by the optical system is 2,000 millimeters; the eye relief is 17 millimeters; the thickness of the lens 100 is 7 millimeters, that is, the distance between the planar surface and the aspherical surface is 7 millimeters; the distance between the aspherical surface 120 and the display surface 300 of the display screen is 18.9 millimeters; the material of the lens 10 is cyclic olefin copolymer (APL5014XH); half of the exit pupil diameter is 2 microns; half of the effective aperture of the lens 100 is 26 microns; half of the size of the imaging surface is 23 millimeters; half of the size of the virtual image is 2514.344597837911 millimeters; and the conic constant of the aspherical surface 120 is -1.

In the optical system provided by the present disclosure, the eye relief, the lens thickness, the distance between the lens and the display surface of the display screen, the refractive index of the lens, the curvature radius of the aspherical surface, the conic constant, and the even aspheric coefficient may be optimized, so as to obtain an optical system having large field of view and having a good imaging effect under long eye relief.

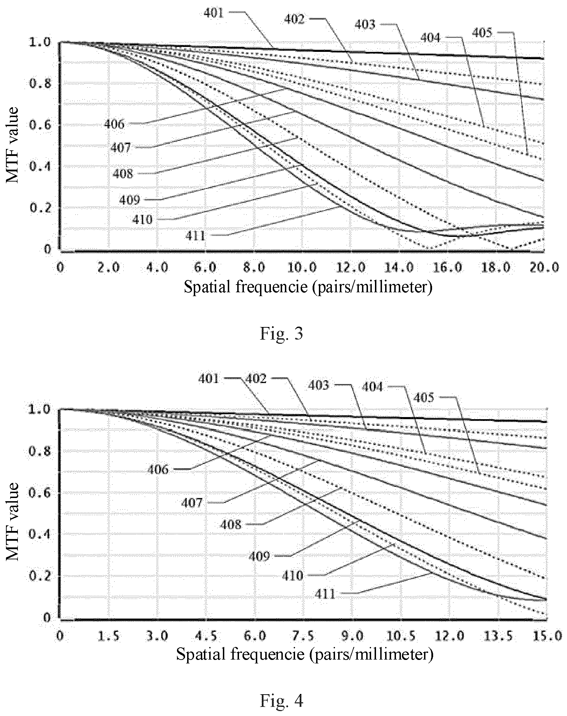

Fig. 3 is a modulation transfer function (MTF) curve of the optical system provided by the embodiment of the present disclosure when a cutoff frequency is 20 line pairs/millimeter. For example, Fig. 3 shows modulation transfer function values, for example, MTF values, of meridian 403, meridian 406, meridian 407, meridian 409, and meridian 411 (as shown by the solid line in the diagram) at different spatial frequencies of the optical system under different fields of view, as well as modulation transfer function values, for example, MTF values, of sagittal line 402, sagittal line 404, sagittal line 405, sagittal line 408, and sagittal line 410 (as shown by the dashed line in the diagram) at different spatial frequencies of the optical system under different fields of view. For example, curve 401 represents the diffraction limit. For example, meridian 403 is the meridian at a half field of view of 51 °, meridian 406 is the meridian at a half field of view of 5 °, meridian 407 is the meridian at a half field of view of 10 °, meridian 409 is a meridian at a half field of view of 45 °, and meridian 411 is the meridian at a half field of view of 20 °. For example, sagittal line 402 is the sagittal line at a half field of view of 20 °, sagittal line 404 is the sagittal line at a half field of view of 10 °, sagittal line 405 is the sagittal line at a half field of view of 5 °, sagittal line 408 is the sagittal line at a half field of view of 45 °, and sagittal line 410 is the sagittal line at a half field of view of 51 °.

For example, the above-described modulation transfer function value may also be referred to as resolution; and resolution is capability to distinguish details of a photographed subject and is a physical quantity that may be used to describe capability of a microfilm system to reproduce fine parts of the photographed subject.

The modulation transfer function (MTF) curve may comprehensively reflect imaging quality of the optical system. The smoother the curve shape and the higher the MTF value, the better the imaging quality of the optical system. Fig. 3 shows the modulation transfer function curve when a cutoff frequency is 20 line pairs/millimeter (lp/mm), and shows modulation transfer function curves corresponding to a plurality of field of view rays. As shown in Fig. 3, the overall modulation transfer function curve is smooth, and a modulation transfer function value under an edge field of view (e.g., 102 °) may reach 0.7 or above.

In some examples, as shown in Fig. 3, the modulation transfer function value of the optical system at the maximum field of view is no less than 0.7 at a position where a spatial frequency is 20 line pairs/millimeter. For example, the modulation transfer function value of the optical system under the field of view of 102 ° is no less than 0.7 at the position where the spatial frequency is 20 line pairs/millimeter. For example, the modulation transfer function curve of the optical system under the field of view of 102 ° is no less than 0.72 at the position where the spatial frequency is 20 line pairs/millimeter.

For example, the above-described respective meridians and sagittal lines may all be meridians and sagittal lines of green light (e.g., those with the central wavelength of 550 nm).

In the optical system provided by the present disclosure, while the lens is combined with Pancake, the lens is set as an integrated lens; on the basis of the planoconvex lens, the convex surface is changed from a spherical surface to an aspherical surface; the focal length of the optical system is set; and parameters such as the focal length and the effective aperture of the integrated lens, the curvature radius of the aspherical surface, the lens thickness, and the refractive index of the lens are also set and optimized, so that on the basis that the optical system has an ultra-short focal length, the optical system may have the maximum field of view up to 100 ° or more, the eye relief up to 17 millimeters or more, and the image distance of the formed virtual image up to 2,000 millimeters; meanwhile, by optimizing the coefficients of the aspherical surface high-order terms, the modulation transfer function (MTF) value of the edge field of view of the optical system may be no less than 0.7 at the position where the spatial frequency is 20 line pairs/millimeter. The optical system has a good imaging effect and may meet viewing needs of myopic users wearing glasses.

For example, as shown in Fig. 3, the modulation transfer function value of the optical system under a field of view of 40 ° is no less than 0.8 at the position where the spatial frequency is 20 line pairs/millimeter.

For example, as shown in Fig. 3, the modulation transfer function value of the optical system under a field of view of 20 ° is no less than 0.5 at the position where the spatial frequency is 20 line pairs/millimeter.

Fig. 4 is a modulation transfer function curve of the optical system provided by the embodiment of the present disclosure when a cutoff frequency is 15 line pairs/millimeter.

For example, as shown in Fig. 4, curve 401 represents the diffraction limit. For example, meridian 403 is the meridian at a half field of view of 51 °, meridian 406 is the meridian at a half field of view of 5 °, meridian 407 is the meridian at a half field of view of 10 °, meridian 409 is the meridian at a half field of view of 45 °, and meridian 411 is the meridian at a half field of view of 20 °. For example, sagittal line 402 is the sagittal line at a half field of view of 20 °, sagittal line 404 is the sagittal line at a half field of view of 10 °, sagittal line 405 is the sagittal line at a half field of view of 5 °, sagittal line 408 is the sagittal line at a half field of view of 45 °, and sagittal line 410 is the sagittal line at a half field of view of 51 °.

In some examples, as shown in Fig. 4, a modulation transfer function value of the optical system at the maximum field of view is no less than 0.8 at a position where a spatial frequency is 15 line pairs/millimeter. For example, the modulation transfer function value of the optical system under a field of view of 102 ° is no less than 0.8 at the position where the spatial frequency is 15 line pairs/millimeter. For example, the modulation transfer function value of the optical system under a field of view of 102 ° is no less than 0.82 at the position where the spatial frequency is 15 line pairs/millimeter.

For example, as shown in Fig. 4, the modulation transfer function value of the optical system under a field of view of 40 ° is no less than 0.85 at the position where the spatial frequency is 15 line pairs/millimeter.

For example, as shown in Fig. 4, the modulation transfer function value of the optical system under a field of view of 20 ° is no less than 0.65 at the position where the spatial frequency is 15 line pairs/millimeter.

For example, as shown in Fig. 4, the modulation transfer function value of the optical system under a field of view of 10 ° is no less than 0.5 at the position where the spatial frequency is 15 line pairs/millimeter.

In the optical system provided by the present disclosure, while the lens is combined with Pancake, the lens is set as an integrated lens; on the basis of the planoconvex lens, the convex surface is changed from a spherical surface to a aspherical surface; parameters such as the focal length and the effective aperture of the integrated lens, the curvature radius of the aspherical surface, the lens thickness, and the refractive index of the lens are set and optimized, so that on the basis that the optical system has an ultra-short focal length, the optical system may have the maximum field of view up to 100 ° or more, the eye relief up to 17 millimeters or more, and the image distance of the formed virtual image up to 2,000 millimeters; meanwhile, by optimizing the coefficients of the aspherical surface high-order terms, the modulation transfer function (MTF) value of the edge field of view of the optical system may be no less than 0.8 at the position where the spatial frequency is 15 line pairs/millimeter. The optical system has a good imaging effect and may meet viewing needs of myopic users wearing glasses.

For example, the aspheric surface 120 of the lens 100 can be made into an aspheric surface through grinding processing or machining. For example, a glass mold can be formed into a glass mold with an aspheric shape, or resin can be formed on the surface of the glass into a composite aspheric shape with an aspheric shape.

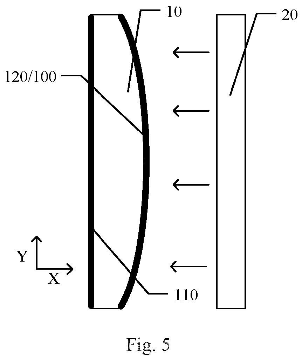

Fig. 5 is a structural schematic diagram of a display device provided by an embodiment of the present disclosure. As shown in Fig. 5, the display device includes a display screen 20 and the optical system 10 shown in the above-described embodiment. The display screen 20 is located on a side of the aspherical surface 120 that is away from the planar surface 110; and the display surface of the display screen 20 is located on a focal plane of a light incident side of the optical system 10.

In some examples, as shown in Fig. 5, a distance between the aspherical surface 120 and the display surface of the display screen 20 is 26 millimeters to 28 millimeters. For example, the distance between the aspherical surface 120 and the display surface of the display screen 20 is 27 millimeters. For example, the distance between the aspherical surface 120 and the display surface of the display screen 20 is 26.5 millimeters to 27.5 millimeters. For example, the distance between the aspherical surface 120 and the display surface of the display screen 20 is 26.2 millimeters to 27.8 millimeters. For example, the distance between the aspherical surface 120 and the display surface of the display screen 20 is 26.4 millimeters to 27.6 millimeters. For example, the distance between the aspherical surface 120 and the display surface of the display screen 20 is 26.8 millimeters to 27.2 millimeters.

In the display device provided by the present disclosure, the lens is set as an integrated lens including an aspherical surface; parameters such as the focal length and the effective aperture of the integrated lens, the curvature radius of the aspherical surface, the lens thickness, and the refractive index of the lens are set; meanwhile, folding of the light path may be implemented by arranging the polarization transflective film and the phase retardation film on one side of the lens, and arranging the transflective film on the other side of the lens, which greatly reduces the focal length of the optical system, so that on the basis that the optical system has a relatively small size, the optical system may have the maximum field of view up to 100 ° or more, the eye relief up to 17 millimeters or more, and the image distance of the formed virtual image up to 2,000 millimeters; and thus, the distance between the lens and the display surface of the display screen is shortened to 27 millimeters, which is favorable for reducing the volume of the display device while improving viewing experience of myopic users wearing glasses.

In some examples, the maximum size of the display surface of the display screen 20 is 2 inches to 3 inches. For example, the maximum size of the display screen 20 is 2.5 inches. For example, the display surface of the display screen 20 may have a rectangular shape; and a diagonal size of the rectangle may be 2.5 inches.

For example, the display screen 20 may be any type of display screen, for example, a liquid crystal display screen, an organic light emitting diode display screen, an inorganic light emitting diode display screen, a quantum dot display screen, a projector (e.g., a LCOS micro projector), etc.

For example, the display device may be a virtual reality display device. For example, the virtual reality display device may be a display device adopting the folded optical path with ultra-short focal length.

For example, the display device may be a near eye display device; and the near eye display device may be a wearable VR helmet, VR glasses, etc., which will not be limited in the embodiment of the present disclosure.

The following statements should be noted:

(1) In the accompanying drawings of the embodiments of the present disclosure, the drawings involve only the structure(s) in connection with the embodiment(s) of the present disclosure, and other structure(s) can be referred to common design(s).

(2) In case of no conflict, features in one embodiment or in different embodiments can be combined.

What have been described above are only specific implementations of the present disclosure, the protection scope of the present disclosure is not limited thereto, and the protection scope of the present disclosure should be based on the protection scope of the claims.

**Claims**

1. An optical system, comprising:

a lens, comprising a planar surface and an aspherical surface; the aspherical surface being a convex surface; and a side of the planar surface that is away from the aspherical surface being a light exit side of the lens;
a polarization transflective film, disposed on a side of the planar surface of the lens that is away from the aspherical surface of the lens;
a phase retardation film, disposed between the polarization transflective film and the planar surface of the lens;
a transflective film, disposed on a side of the aspherical surface of the lens that is away from the planar surface of the lens;
wherein the lens is an integrated lens; the planar surface and the aspherical surface are located on two opposite sides of the integrated lens; a focal length of the optical system is 26 millimeters to 28 millimeters; an effective aperture of the lens is 50 millimeters to 52 millimeters; and a curvature radius of the aspherical surface is -93 millimeters to -97 millimeters.

2. The optical system according to claim 1, wherein a focal length of the lens is 160 millimeters to 180 millimeters.

3. The optical system according to claim 1 or 2, wherein a maximum thickness of the lens is 6 millimeters to 8 millimeters.

4. The optical system according to any one of claims 1 to 3, wherein an eye relief of the optical system is 13 millimeters to 21 millimeters.

5. The optical system according to claim 4, wherein the eye relief of the optical system is no less than 15 millimeters.

6. The optical system according to claim 4 or 5, wherein a maximum field of view of the optical system is 100 ° to 110 °.

7. The optical system according to claim 6, wherein a modulation transfer function value of the optical system at the maximum field of view is no less than 0.7 at a position where a spatial frequency is 20 line pairs/millimeter.

8. The optical system according to claim 6 or 7, wherein a modulation transfer function value of the optical system at the maximum field of view is no less than 0.8 at a position where a spatial frequency is 15 line pairs/millimeter.

9. The optical system according to any one of claims 1 to 8, wherein a refractive index of the lens is 1.5 to 1.6.

10. The optical system according to any one of claims 1 to 9, wherein the phase retardation film and the polarization transflective film are fitted to the planar surface.

11. A display device, comprising a display screen and the optical system according to any one of claims 1 to 10, wherein the display screen is located on a side of the aspherical surface of the lens that is away from the planar surface of the lens; and a display surface of the display screen is located on a focal plane of a light incident side of the optical system.

12. The display device according to claim 11, wherein a distance between the aspherical surface and the display surface of the display screen is 26 millimeters to 28 millimeters.

13. The display device according to claim 11 or 12, wherein a maximum size of the display surface of the display screen is 2 inches to 3 inches.

110/100
600
500
120/100
700

Y
X

Fig. 1

200
300
100

Fig. 2

Fig. 3

Fig. 4

Fig. 5

## INTERNATIONAL SEARCH REPORT

| | International application No. |
|---|---|
| | **PCT/CN2023/097007** |

| **A.** | **CLASSIFICATION OF SUBJECT MATTER** |
|---|---|
| | G02B27/01(2006.01)i;  G02B27/28(2006.01)i |

According to International Patent Classification (IPC) or to both national classification and IPC

| **B.** | **FIELDS SEARCHED** |
|---|---|

Minimum documentation searched (classification system followed by classification symbols)

    IPC：G02B27

Documentation searched other than minimum documentation to the extent that such documents are included in the fields searched

Electronic data base consulted during the international search (name of data base and, where practicable, search terms used)

    CNTXT, ENTXTC, VEN, DWPI, CNKI; 平凸, 平面, 凸面, 相位, 延迟, 波片, 偏振, 偏光, 焦距, 径, 折叠, 视场, 视角, 非球; pancake, polariz+, phase, delay, +convex, waveplate, non-spherical

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 111929906 A (GOERTEK OPTICAL TECHNOLOGY CO., LTD.) 13 November 2020 (2020-11-13)<br>    description, paragraphs 0020-0050, and figures 1-12 | 1-13 |
| X | CN 212111989 U (GOERTEK OPTICAL TECHNOLOGY CO., LTD.) 08 December 2020 (2020-12-08)<br>    description, paragraphs 0044-0089, and figures 1-12 | 1-13 |
| A | JP H08327940 A (SHARP K. K.) 13 December 1996 (1996-12-13)<br>    entire document | 1-13 |
| A | US 2019018255 A1 (GOOGLE LLC.) 17 January 2019 (2019-01-17)<br>    entire document | 1-13 |
| A | CN 112136084 A (FACEBOOK TECHNOLOGIES, LLC.) 25 December 2020 (2020-12-25)<br>    entire document | 1-13 |
| A | CN 110308559 A (SHANGHAI SEEYA INFORMATION TECHNOLOGY CO., LTD.) 08 October 2019 (2019-10-08)<br>    entire document | 1-13 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 September 2023** | **13 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/097007**

| Patent document cited in search report | | | Publication date (day/month/year) | Patent family member(s) | | | Publication date (day/month/year) |
|---|---|---|---|---|---|---|---|
| CN | 111929906 | A | 13 November 2020 | None | | | |
| CN | 212111989 | U | 08 December 2020 | None | | | |
| JP | H08327940 | A | 13 December 1996 | US | 6304303 | B1 | 16 October 2001 |
| | | | | JP | 3295583 | B2 | 24 June 2002 |
| | | | | DE | 69531140 | D1 | 31 July 2003 |
| | | | | DE | 69531140 | T2 | 08 April 2004 |
| | | | | EP | 0718645 | A2 | 26 June 1996 |
| | | | | EP | 0718645 | A3 | 16 October 1996 |
| | | | | EP | 0718645 | B1 | 25 June 2003 |
| | | | | US | 6094242 | A | 25 July 2000 |
| US | 2019018255 | A1 | 17 January 2019 | WO | 2019013864 | A1 | 17 January 2019 |
| | | | | KR | 20190133781 | A | 03 December 2019 |
| | | | | JP | 2020526780 | A | 31 August 2020 |
| | | | | EP | 3593199 | A1 | 15 January 2020 |
| CN | 112136084 | A | 25 December 2020 | US | 2022163808 | A1 | 26 May 2022 |
| | | | | WO | 2019221811 | A1 | 21 November 2019 |
| | | | | WO | 2019221811 | A8 | 26 November 2020 |
| | | | | US | 2019353906 | A1 | 21 November 2019 |
| | | | | US | 11243397 | B2 | 08 February 2022 |
| | | | | EP | 3776092 | A1 | 17 February 2021 |
| | | | | EP | 3776092 | A4 | 02 June 2021 |
| CN | 110308559 | A | 08 October 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210714718